# EUROPEAN PATENT SPECIFICATION

(11) **EP 4 430 697 B1**
(45) Date of publication and mention of the grant of the patent: **03.12.2025**
(21) Application number: 22802923.7
(22) Date of filing: 12.10.2022
(51) Int. Cl.: H01M 50/202, H01M 50/30

(54) **VENTING AND SEPARATING DEVICE FOR A BATTERY HOUSING**
ENTLÜFTUNGS- UND TRENNVORRICHTUNG FÜR EIN BATTERIEGEHÄUSE
DISPOSITIF DE DÉGAZAGE ET DE SÉPARATION POUR UN BOÎTIER DE BATTERIE

(30) Priority: 08.11.2021 DE 102021128949
(43) Date of publication of application: 18.09.2024
(73) Proprietor: MANN+HUMMEL GmbH, 71636 Ludwigsburg (DE)
(72) Inventor: ZBIRAL, Robert, 71672 Marbach (DE)
(74) Representative: Mann + Hummel Intellectual Property
(86) International application number: PCT/EP2022/078389
(87) International publication number: WO 2023/078651

(56) References cited:
- EP-A1- 1 970 258
- DE-A1- 102012 022 346
- US-A- 5 538 807
- US-A1- 2022 223 974

## Description

### Technical Field

Embodiments concern a venting and separating device for a battery housing, as well as a housing, in particular a battery housing, for receiving battery cells, in particular of a traction battery of a motor vehicle.

### Background

Housings for receiving electronic components such as, for example, battery cells and the like, are usually not closed off completely gas-tightly relative to the environment. On the one hand, due to temperature fluctuations, for example, due to heat introduction during charging or discharging of battery cells, and, on the other hand, due to naturally occurring air pressure fluctuations, in particular in mobile systems, a gas exchange between interior and exterior is to be enabled. Due to the gas exchange, impermissible mechanical loads of the housing, in particular bursting or bulging of the housing, can be prevented. On the other hand, in particular in battery housings, an emergency venting function must be present in case of sudden pressure increase due to failure of battery cells because otherwise the housing could become damaged.

Likewise important is however that the ingress of foreign bodies, dirt, and moisture in form of liquid water is effectively prevented. Therefore, pressure compensation devices are known that include semipermeable membranes, for example, of extruded polytetrafluoroethylene (PTFE), that are gas-permeable but liquid-impermeable.

DE 10 2012 022 346 B4 discloses a degassing unit for a battery housing that includes a base body that includes a gas passage opening which is covered by a semipermeable membrane that is permeable for gases but impermeable for liquids, wherein the membrane is connected stationarily and fluid-tightly to the base body, in particular welded. The base body is fluid-tightly connectable to a pressure compensation opening of the battery housing. The membrane ensures a gas exchange in normal operation by its semipermeable properties, while, for realizing an emergency degassing function, an emergency degassing spike pointing toward the membrane is arranged at a cover body and, upon surpassing an expansion limit induced by a housing inner pressure, perforates the membrane and causes it to rupture so that a sudden pressure compensation from the interior to the environment is possible. At an inner side which is facing the battery housing in a mounted state, an inner protective grid is connected to the base body that is to prevent ingress by means of foreign bodies into the battery housing and that supports the membrane against water pressure from the exterior.

### Summary

It is an object of the embodiments to provide a venting and separating device, in particular a venting filter, for a degassing unit of a housing, in particular of a battery housing of a traction battery of a motor vehicle, which permits quick venting of the housing with minimal pressure loss and prevents escape of particles.

A further object is to provide a housing, in particular a battery housing, with a venting and separating device which permits quick venting of the housing with minimal pressure loss and prevents escape of particles.

The aforementioned object is solved according to an aspect of the embodiments by a venting and separating device for a housing, the venting and separating device including a first separation screen including first screen openings, and a second separation screen including second screen openings. The second separation screen is surrounded circumferentially by the first separation screen, and the first separation screen and the second separation screen overlap each other in an axial direction. For intended mounting at the housing, the second separation screen engages completely across a housing opening for venting. A wall of the first separation screen and/or a wall of the second separation screen is corrugated multiple times. The first separation screen and the second separation screen are arranged to be flowed through serially, and for intended mounting at the housing, at least a downstream one among the first separation screen and the second separation screen in respect to flow is flowed through in a radial direction.

The further object is solved according to a further aspect of the embodiments by a housing for receiving battery cells, the housing including a housing wall with a housing opening, and the venting and separating device described above and closing the housing opening at an inner side of the housing wall.

Beneficial embodiments and advantages of the embodiments result from the further claims, the description, and the drawing.

Advantageously, the first screen openings include a larger cross-sectional area than the second screen openings.

The proposed venting and separating device serves for separating particles starting at a certain size from hot gas streams which typically can be hotter than 200° C. In this context, the actual exiting fluid stream is not additionally impaired so that due to the particles separated at the filter the pressure loss does not increase impermissibly. The venting and separating device can advantageously have a particularly flat configuration.

The venting and separating device may be directly connected by connection elements known from the prior art to a housing wall of the housing with a housing opening for the passage of gas, the housing wall being planar at least in this region. In this context, an adaptation to a predetermined contour of the housing wall is also possible.

When the cross-sectional area of this housing opening is considered a requirement for the flow, the flow loss due to the geometry of the venting and separating device including numerous openings of a certain size, the open cross-sectional area as well as a certain degree of cross section reduction by particles that deposit at the venting and separating device and/or are collected in the venting and separating device must be taken into consideration.

Proposed are at least two separation screens that are serially connected one behind the other, retain particles of different size, and are essentially embodied as at least partially perforated sheet metal, for example, in circular hole shape, slotted hole shape, slit shape, and/or at least partially as wire mesh, plait fabric or sandwich wire mesh.

For the connection of the individual, e.g., metallic, elements providing the complete venting and separating device with all separation stages and fastening elements for the assembly, all methods known therefor are conceivable.

The proposed venting and separating device can be arranged, for example, in the housing but also outside of the housing or at least partially outside of the housing.

Advantageously, with the proposed venting and separating device, the gases exiting in case of a cell defect can be discharged in a controlled fashion with a pressure loss as little as possible and, in this context, the escape of particles from the housing can be prevented as effectively as possible. In this context, the construction height of the venting and separating device can be reduced to a required minimum in order to ensure as much space as possible for active components in the housing.

Advantageously, particles, in particular hot (lithium) particles which are released by individual or a plurality of battery cells in case of a cell defect, can be retained by the venting and separating device and cannot reach unhindered the environment.

Advantageously, an arrangement of the two separation screens that builds particularly low axially can be realized.

According to a beneficial embodiment of the venting and separating device, the first separation screen and/or the second separation screen can be in a form of one among a right prism that is open at one side, a cylinder that is open at one side, and multiple cylinder sections abutting each other. In this manner, an arrangement of the two separation screens that builds particularly low axially can be realized.

According to a further embodiment, the first separation screen and the second separation screen can have substantially the same axial extensions. Alternatively, the first separation screen and the second separation screen can have different axial extensions, i.e., can be of different length. The second separation screen can have a larger axial extension than that of the first separation screen so that the second separation screen projects with sections past the first separation screen. The venting and separating device may further include at least one fastening device for fastening at the housing. The fastening device may be arranged at the first separation screen, and the fastening device may include a fastening tab. Due to this embodiment, the venting and separation device according to the embodiments can be adapted particularly well to installation space requirements which, in particular for mounting in the interior of a battery housing, is an important aspect that makes it possible to realize the greatest possible separation area in a predetermined installation space.

According to a beneficial embodiment of the venting and separating device, the first separation screen and the second separation screen can respectively include a first cover plate and a second cover plate that cover the first separation screen and the second separation screen at an end face side. The second cover plate and the first cover plate may be embodied as one piece. For example, a cover plate of the second separation screen can be embodied as a part of a cover plate of the first separation screen. Due to the common configuration of the two cover plates, a low configuration of the venting and separating device can be realized.

In an embodiment, the one-piece cover plate that includes the cover plate of the first as well as of the second separation screen can moreover be embodied as one piece together with the separation screen, in particular as one piece together with the first separation screen.

According to a further embodiment variant, the first cover plate of the first separation screen and the second cover plate of the second separation screen are present at an end face of the first separation screen and the second separation screen that, for intended mounting at the housing, is facing toward an interior of the housing.

According to a beneficial embodiment of the venting and separating device, a cross section of the second separation screen follows a shape of a cross section of the housing opening.

When the last separation stage at the housing opening follows geometrically directly the shape of this housing opening, a construction height for the venting and separating device that is possibly disadvantageous results due to the fluidically required cross-sectional area. Advantageously, this separation screen can be embodied outwardly, i.e., facing away from the opening, in a corrugated shape following the geometric shape of the housing opening. This can be designed such that the thus required height is smaller or the same as the required height of the other separation screens. In this context, beneficially the first separation screen, i.e., the one that is fluidically farthest removed from the housing opening in the housing wall, can be designed rectangular so that a substantially planar, comparatively flat venting and separating device can be realized that can be used also for very tight space conditions.

In case of a circular opening cross section of the housing opening, for example, a last separation screen with rotation-symmetrically arranged folded structure can arise. In case that a lateral inflow of the venting and separating device is not possible or possible only greatly restricted, the first separation screen can also be partially or completely arranged at the end face side. Provided a rectangular shape is present, this separation screen then can be somewhat longer and/or wider than in case of lateral inflow but still include a configuration that is not higher and also very flat.

According to the embodiments, a wall of the first separation screen that includes the first screen openings and/or a wall of the second separation screen that includes the second screen openings can be embodied so as to be corrugated multiple times.

Herein, "corrugated" is understood as a structure that includes a plurality of oppositely directed folds and therefore forms a wavy course.

The significant difference resides in the corrugated embodiment of at least one separation screen whereby its surface area is significantly enlarged so that the construction height of the entire venting and separating device can be significantly reduced for the same flow. A partial clogging of the separation screen by particle accumulations, a sufficiently large accumulation volume between the two separation screens as well as a flow loss due to the geometry of the screen openings can advantageously be taken into consideration.

Due to a separation screen of corrugated configuration, e.g., the innermost separation screen, its surface area can be significantly increased, for example, by more than 20%, so that the installation space for the entire venting and separating device can be significantly reduced. This is of particular importance for housings that are to be furnished so as to fill space as much as possible with the actual functional components and/or in which defined regions must be kept free in order to ensure a certain deformation behavior, for example, in case of a crash. In the housing of a high voltage battery for a vehicle, as many as possible of battery cells, or modules, are to be accommodated usually in a predetermined space while taking into consideration all requirements with regard to crashes.

Advantageously, the first and/or second screen openings can be embodied in slotted hole shape or circular or oval. A combination, for example, of circular and slotted hole-shaped screen openings, is possible. The first screen openings can be suited advantageously for separation of coarse particles, the second screen openings for separation of fine particles. The first separation screen can separate, for example, particles with a diameter larger than 1.5 mm while the second separation screen can separate particles with a diameter larger than 1.0 mm.

According to a beneficial embodiment of the venting and separating device, at least one among the first cover plate and the second cover plate may be, at least in sections, free of through openings. The second cover plate of the second separation screen can be embodied substantially fluid-tightly. In case of fluid-tight cover plates, the flow through the separation screens can be realized radially. In this way, a construction shape of the venting and separating device that is low in axial direction can be advantageously realized.

Advantageously, the cover plate of the second separation screen can be embodied substantially fluid-tightly. In this way, at least, e.g., 90% of the surface area of the cover plate can be impermeable to flow. On the other hand, the cover plate of the first separation screen in certain embodiments can be configured to enable flow therethrough in that it has first screen openings.

According to a beneficial embodiment of the venting and separating device, the second cover plate of the second separation screen can include a bypass element comprising a rated break point being a perforation that is at least part-circumferentially arranged and that penetrates the second cover plate. In the region of the perforation, therefore a minimal flow-through path for the fluid through the cover plate of the second separation screen can result.

Advantageously, a bypass of the separation screen is to be provided for an impermissible pressure increase, for example, in the situation that a separation screen is clogged too much with particles. For this purpose, for example, in a suitable region of the separation screen that is not provided for separation, a suitable point of weakness, for example, by perforation or notching, can be provided that will fail at a certain pressure and thus release a flow path for pressure compensation that is not extending through the separation screen. Of course, other pressure relief valves known in the prior art can also be appropriately integrated.

According to a beneficial embodiment of the venting and separating device, the first separation screen and/or the second separation screen can be flowed through radially.

In an embodiment, the second separation screen can be radially flowed through, and the first separation screen can be axially flowed through and/or, at least in sections, can be radially flowed through. The first cover plate of the first separation screen may be fluid-permeable and include the first screen openings. In this way, a configuration of the venting and separating device that is low in axial direction can be advantageously realized.

According to a beneficial embodiment of the venting and separating device, the first separation screen and the second separating screen can comprise a heat-resistant material, in particular of a heat-resistant plastic material and/or of metal, in particular sheet steel. The first separation screen and the second separation screen can be connected by material fusion, for example, welded, or by frictional connection. The connection of the first and second separation screens can be directly realized in embodiments, alternatively or additionally however also indirectly by means of at least one of the cover plates, e.g., via the common cover plate of the first and second separation screens.

According to a beneficial embodiment, at least one among the first cover plate and the second cover plate can include an electrically nonconductive material. The common cover plate of the first and second separation screens may include, or may be comprised of, an electrically nonconductive material. The material may be not only electrically nonconductive but also heat-resistant. This has the advantage that a distance to high voltage-conducting components in the battery can be selected smaller than in case of metals that are electrically conductive.

Since the escaping gas of battery cells is very hot, typically hotter than 200°C, it is advantageous to use particularly heat-resistant materials such as metals, in particular sheet steel, for the separation screens.

According to a beneficial embodiment of the venting and separating device, the venting and separating device may further include a medium for depth filtration of particles arranged between the first separation screen and the second separation screen.

Between the two separation screens, a volume that is to be provided sufficiently large can beneficially arise for the separation of at least the second smaller particle size and, as needed, can be filled out by a shaped body of a three-dimensional metallic structure that is suitable for receiving particles of different size. Such a medium for depth filtration can be embodied, for example, as a porous body, in particular as metal foam, nonwoven, in particular metal fiber nonwoven.

The proposed housing that can be in particular used as a battery housing includes a venting and separating device which serves for separation of particles beginning at a certain size from the hot gas streams which typically can be hotter than 200° C. In this context, the actually exiting fluid flow is not additionally hindered so that the pressure loss does not increase impermissibly due to the particles separated at the filter. The venting and separating device can advantageously include a particularly flat configuration whereby advantageously a sufficient installation space is provided in the housing for battery cells and/or electronics.

The venting and separating device can be arranged, for example, in the housing but also outside of the housing or at least partially outside of the housing.

According to a beneficial embodiment of the housing, the venting and separating device may further include an areally spanned-across membrane closing the housing opening by being fluid-tightly connected indirectly or directly to a circumferential rim of the housing opening. The membrane can thus be arranged immediately at the housing but can also be present at a membrane carrier that is separate from the housing, for example, at a degassing unit.

The membrane that is embodied advantageously as a semipermeable membrane enables a passage of gaseous media from an environment into the electronics housing and in reverse, but prevents however the passage of liquid media and solids.

For the semipermeable membrane, all materials can be used that include a gas permeability for venting in normal operation and includes a sufficiently high water impermeability. As a material for the semipermeable membrane, polytetrafluoroethylene (PTFE) can be used. The semipermeable membrane includes an average pore size that can lie between 0.01 micrometers and 20 micrometers. The porosity may lie at approximately 50%; the average pore size may amount to approximately 10 micrometers.

The semipermeable membrane can be designed as a film-type or film-shaped or a disk-shaped thin membrane. The gas-permeable membrane includes a membrane surface that is effective for gas permeation and can include at its outer circumference a rectangular or round outer contour. It is understood however that the outer circumference of the membrane can also be designed differently. The membrane may be a thin flat membrane whose membrane surfaces, which are effective for gas passage and are facing away from each other, are substantially parallel to each other and may be substantially embodied planar.

The membrane thickness of the membrane is very much smaller than its remaining outer dimensions. The membrane can span across a minimum width and/or a minimum length or a minimum outer diameter of equal to or larger than 20 mm, of equal to or larger than 30 mm, or of equal to or larger than 40 mm. The membrane thickness can be in particular at least 20 times, at least 40 times, or at least 100 times, smaller than the minimum width and/or the minimum length or the minimum outer diameter of the membrane. The membrane thickness can amount to 1 micrometer to 5 millimeters, 0.1 to 2 mm, or 0.15 to 0.5 mm.

Moreover, the membrane can be connected circumferentially, in particular welded, to a rim of a gas passage opening of a base body, in particular of a degassing unit, e.g., at an inner side of the base body. Alternatively, the membrane can also be glued or secured by frictional connection, for example, clamped. The porous PTFE membrane materials, described herein, can be welded to a plastic base body without problems or connected by material fusion in other ways.

In case of a suddenly increasing pressure in the housing, for example, due to a defective battery cell, the membrane can be caused to rupture by a targeted weakening, for example, by an emergency degassing spike, so that the hot gases of the battery cell can flow out of the housing.

According to a beneficial embodiment of the housing, at least one cross-sectional area of the second separation screen can be closed by the areally spanned-across membrane. In this way, it can be additionally ensured that in normal operation with intact membrane no particles can reach the environment upon pressure compensation.

### Brief Description of the Drawings

Further advantages result from the following drawing description. In the drawings, the embodiments are illustrated. The drawings, the description, and the claims contain numerous features in combination. It is shown in exemplary fashion in:
Fig. 1 is an isometric illustration of a venting and separating device according to an embodiment from the outwardly facing side;
Fig. 2 is a longitudinal section view of the venting and separating device according to Fig. 1;
Fig. 3 is a plan view of the venting and separating device according to Fig. 1 from the outwardly facing side;
Fig. 4 is an isometric section view of the venting and separating device according to Fig. 1;
Fig. 5 is an isometric illustration of a venting and separating device according to a further embodiment from an outwardly facing side;
Fig. 6 is a longitudinal section view of the venting and separating device according to Fig. 5;
Fig. 7 is a plan view of the venting and separating device according to Fig. 5 from the outwardly facing side;
Fig. 8 is an isometric section view of the venting and separating device according to Fig. 5;
Fig. 9 is a plan view of a venting and separating device according to a further embodiment from the outwardly facing side;
Fig. 10 is an isometric illustration of the venting and separating device according to Fig. 9 from an outwardly facing side;
Fig. 11 is an isometric section view of the venting and separating device according to Fig. 9;
Fig. 12 is a plan view of a venting and separating device according to a further embodiment from the outwardly facing side;
Fig. 13 is an isometric illustration of the venting and separating device according to Fig. 12 from an outwardly facing side;
Fig. 14 is an isometric section view of the venting and separating device according to Fig. 12;
Fig. 15 is a plan view of the venting and separating device according to a further embodiment from the outwardly facing side;
Fig. 16 is an isometric illustration of the venting and separating device according to Fig. 15 from an outwardly facing side; and
Fig. 17 is an isometric section view of the venting and separating device according to Fig. 15.

### Detailed Description

In the Figures, same or same-type components are identified with same reference characters. The Figures show only examples and are not to be understood as limiting.

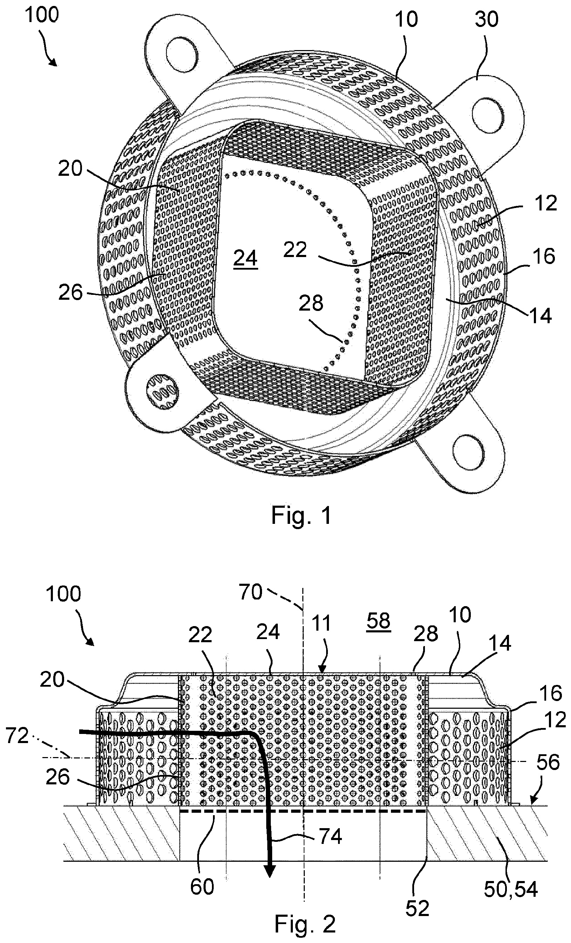

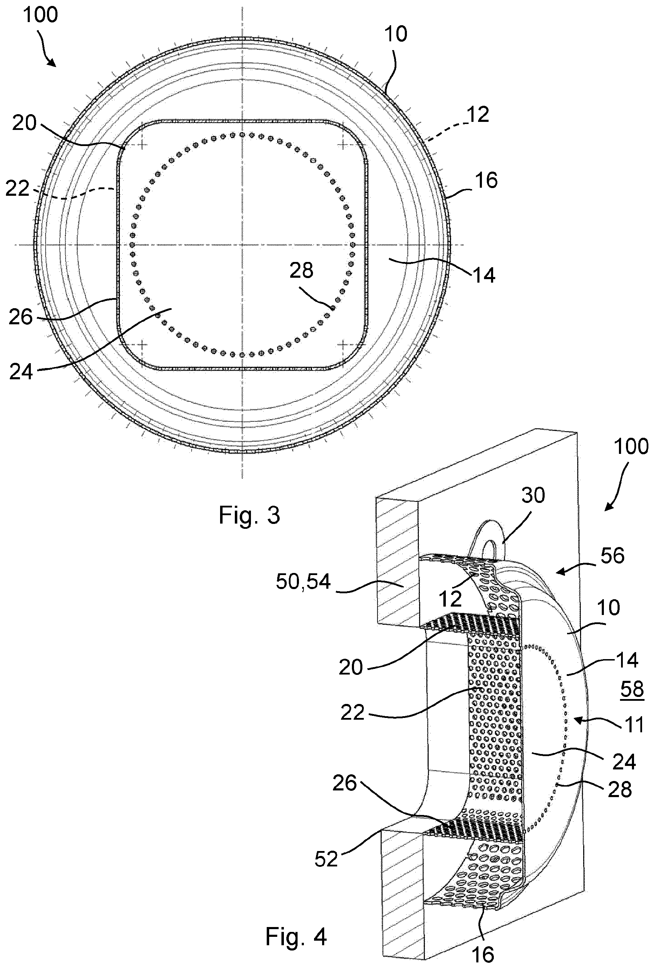

Figure 1 shows in isometric illustration a venting and separating device 100 according to an embodiment from an outwardly facing side. Figure 2 shows a longitudinal section view of the venting and separating device 100 while in Figure 3 a plan view of the venting and separating device 100 from the outwardly facing side and in Figure 4 an isometric section view of the venting and separating device 100 is illustrated.

The venting and separating device 100, in particular venting filter, is provided for a degassing unit of a housing 50, in particular of a battery housing of a traction battery of a motor vehicle. The venting and separating device 100 includes a first separation screen 10 including a plurality of first screen openings 12 and a second separation screen 20 including a plurality of second screen openings 22. The second separation screen 20 is surrounded circumferentially by the first separation screen 10. The two separation screens 10, 20 overlap each other in axial direction 70. For intended mounting at the housing 50, the second separation screen 20 engages completely across a housing opening 52 provided for venting.

The two separation screens 10, 20 are arranged to be flowed through serially and both separation screens 10, 20 can be flowed through in radial direction 72. The flow direction 74 is illustrated by an arrow in the longitudinal section view in Figure 2.

The first screen openings 12 include a larger cross-sectional area than the second screen openings 22. Advantageously, the first and/or the second screen openings 12, 22 can be designed with a slotted hole shape or circular or oval. A combination, for example, of circular with slotted hole-shaped screen openings 12, 22 is possible. The first screen openings 12 can be advantageously suitable for separation of coarse particles, the second screen openings 22 for separation of fine particles. In the embodiment illustrated in Figures 1 to 4, both screen openings 12, 22 are embodied circular.

The first separation screen 10 is embodied in the form of a cylinder open at one side with a plurality of cylinder sections abutting each other. The second separation screen 20 is in the form of a right prism which is open at one side.

As can be seen in particular in the longitudinal section view in Figure 2, the first separation screen 10 and the second separation screen 20 are closed by at least one cover plate 14, 24, respectively, at an end face 11 that, for intended mounting at the housing 50, is oriented toward an interior 58 of the housing 50. The cover plate 24 of the second separation screen 20 is embodied in this context as a part of the cover plate 14 of the first separation screen 10.

The second separation screen 20 can advantageously be embodied with its cross section so as to follow the shape of the housing opening 52. In the illustrated embodiment, this would be the case when the housing opening 52 were of a rectangular shape with rounded corners.

The cover plates 14, 24 are embodied to be fluid-tight at least in sections. In particular, the cover plate 24 of the second separation screen 20 can be substantially embodied to be fluid-tight.

The cover plate 24 of the second separation screen 20 can include namely a bypass element 28, in particular a rated break point and/or a valve. In the illustrated embodiment, the bypass element 28 is embodied as a rated break point in the form of depressions or even small bores which are arranged in the cover plate 24. In case of an excessive and/or a sudden pressure increase, the rated break point can tear open and the part of the cover plate 24 arranged inside of the rated break point can tear off. Through the thus produced opening, the gas can flow out across a large area.

Due to the possibly occurring high gas temperatures from defective battery cells, the first and the second separation screens 10, 20 can be embodied from a heat-resistant material, in particular of a heat-resistant plastic material and/or of metal, in particular sheet steel. In particular, the first and the second separation screens 10, 20 can be connected by material fusion, e.g., welded, or by frictional connection in this context. Due to a possible vicinity of high voltage-conducting components, the cover plate(s) 14, 24 can be designed also of an electrically nonconductive material.

In an advantageous alternative embodiment, a medium for depth filtration of particles can be arranged between the first separation screen 10 and the second separation screen 20. In this context, particles with an average particle diameter can be separated advantageously in this depth filter and can be deposited in the depth of the medium.

The housing 50, that can be in particular a battery housing of a traction battery of a motor vehicle, for receiving battery cells, is illustrated only schematically as a housing wall 54 in the section views of Figures 2 and 4. The housing wall 54 includes a housing opening 52 for venting the housing 50 which is closed by the venting and separating device 100 at the inner side 56 of the housing wall 54.

The housing opening 52 can be closed by an areally spanned-across membrane 60, wherein the membrane 60 is connected fluid-tightly to the housing opening 52. This membrane 60 is schematically illustrated in Figure 2. At least the cross-sectional area of the second separation screen 20 can be closed in this way by the areally spanned-across membrane 60.

The first separation screen 10 includes radially projecting fastening tabs 30 for mounting at the housing 50.

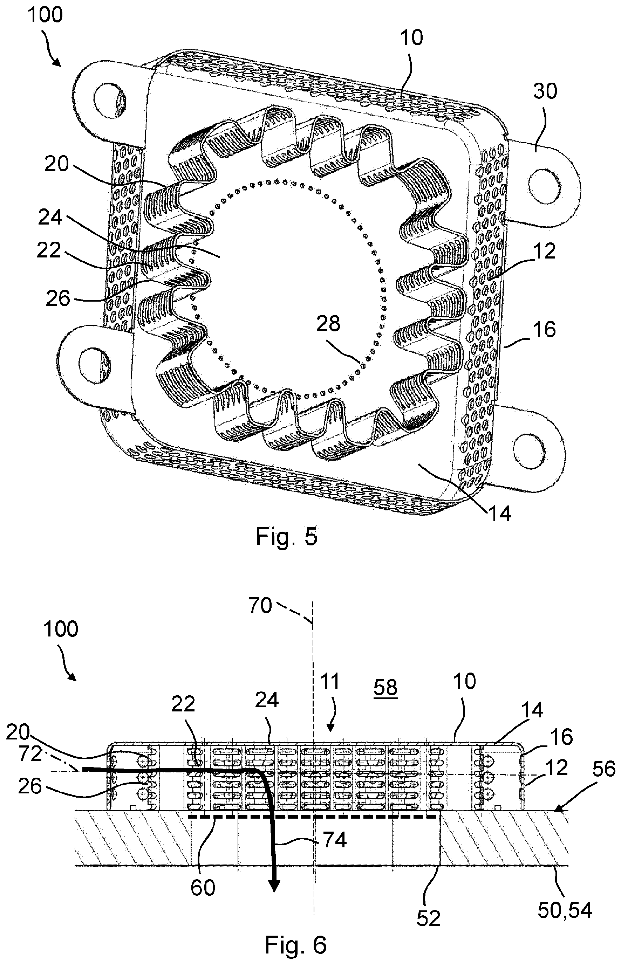

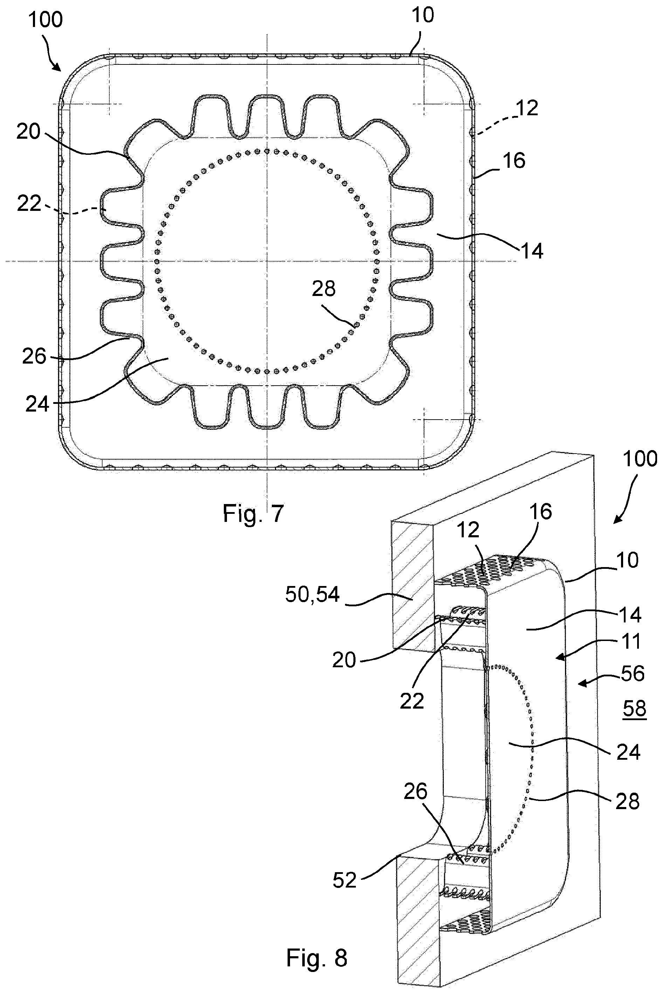

Figure 5 shows an isometric illustration of a venting and separating device 100 according to a further embodiment from an outwardly facing side. Figure 6 shows a longitudinal section view of the venting and separating device 100 while in Figure 7 a plan view of the venting and separating device 100 from the outwardly facing side and in Figure 8 an isometric section view of the venting and separating device 100 is illustrated.

In this embodiment, a wall 26 of the second separation screen 20 is embodied so as to be corrugated multiple times. In this way, in comparison to an embodiment that is not corrugated, the surface for the separation of particles can be significantly increased. Also, the shape of the separation screen 20 can be adapted advantageously to the shape of a housing opening 52 because the corrugated separation screen 20 can be shaped very flexibly. The housing opening 52 is embodied rectangular with rounded corners in this embodiment.

The first separation screen 10 is in the form of a prism while the corrugated embodiment of the second separation screen 20 follows the coarse shape of a prism.

The flow direction 74 is again radially oriented in both separation screens 10, 20.

The screen openings 12 of the first separation screen 10 are embodied circular while the screen openings 22 of the second separation screen 20 are embodied in slotted hole shape.

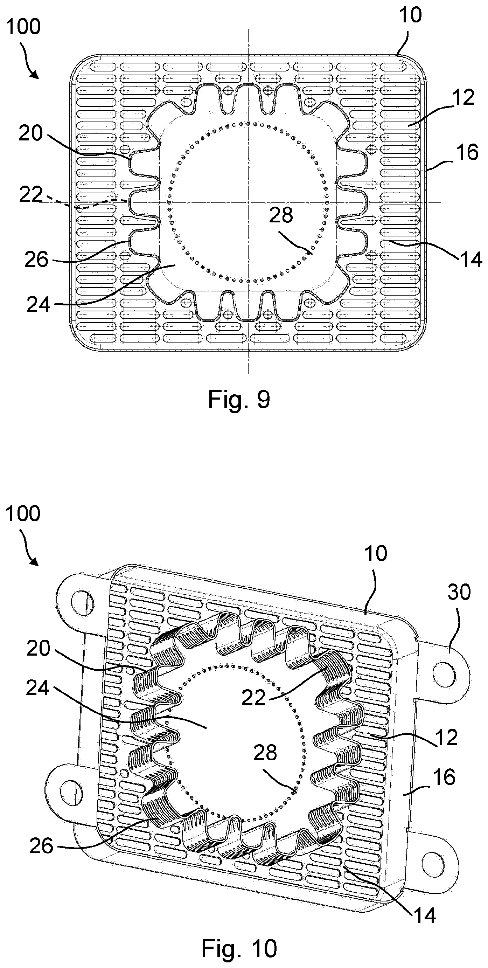

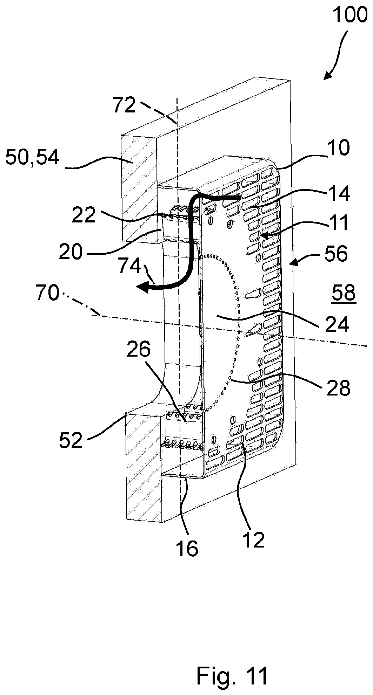

Figure 9 shows a plan view of a venting and separating device 100 according to a further embodiment from the outwardly facing side. Figure 10 shows an isometric illustration of the venting and separating device 100 from an outwardly facing side while in Figure 11 an isometric section view of the venting and separating device 100 is illustrated.

In this embodiment, only the downstream one of the separation screens 10, 20 in respect to flow, the second separation screen 20, can be flowed through in radial direction 72, while the first separation screen 10 can be flowed through in axial direction 70. The flow direction 74 is illustrated in Figure 11.

Both types of screen openings 12, 22 are of a slotted hole configuration. Here also the first separation screen 10 is embodied in the form of a prism. The second separation screen 20 in its corrugated shape also emulates a prism.

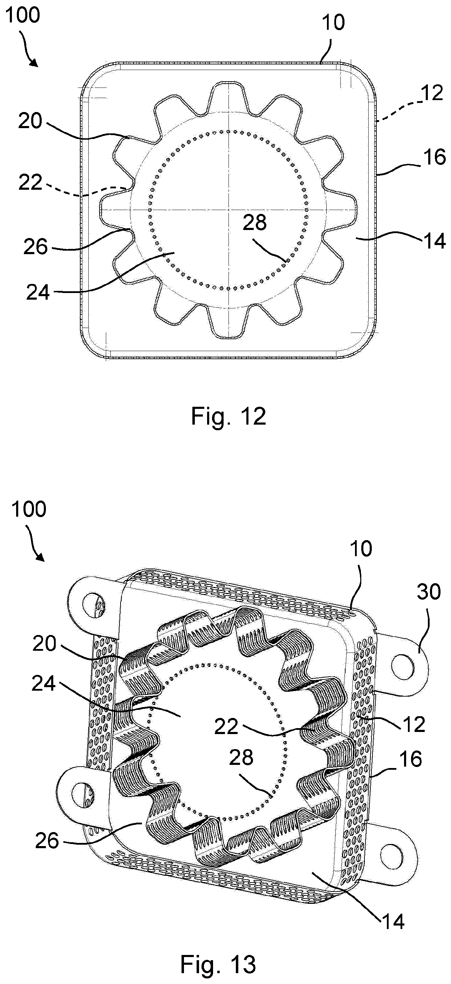

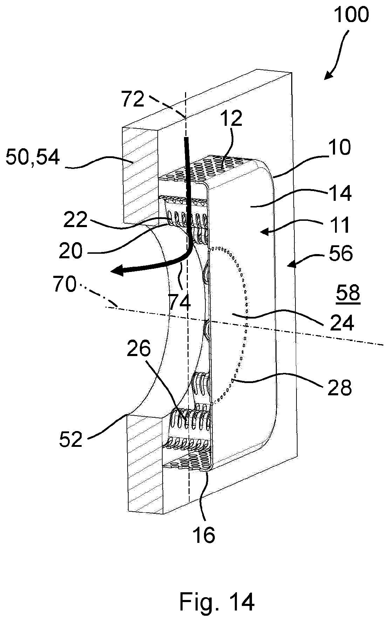

Figure 12 shows a plan view of a venting and separating device 100 according to a further embodiment from the outwardly facing side. Figure 13 shows an isometric illustration of the venting and separating device 100 from an outwardly facing side while in Figure 14 an isometric section of the venting and separating device 100 is illustrated.

The first separation screen 10 is embodied in a prism shape while the second separation screen 20 is corrugated in the shape of a cylinder.

Both separation screens 10, 20 can be flowed through radially. The flow direction is illustrated in Figure 14. The screen openings 12 of the first separation screen 10 are embodied circular while the screen openings 22 of the second separation screen 20 are of a slotted hole configuration.

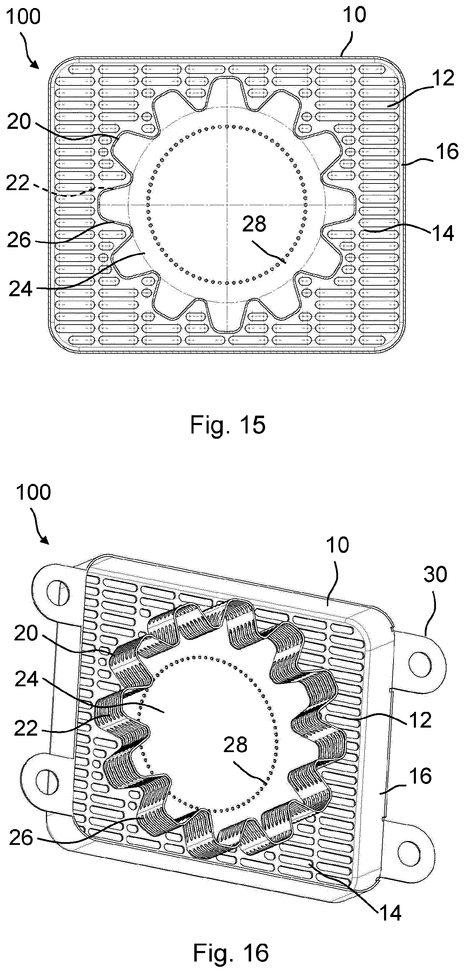

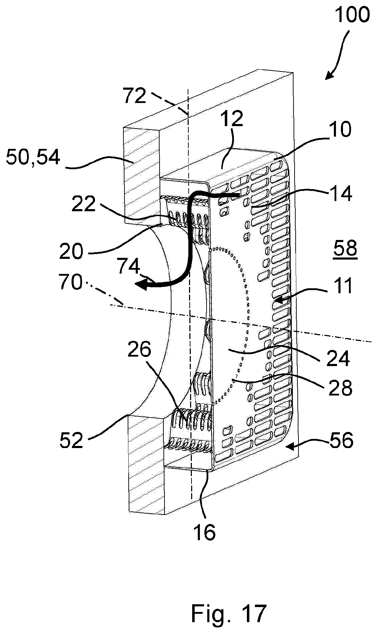

Figure 15 shows a plan view of a venting and separating device 100 according to a further embodiment from the outwardly facing side. Figure 16 shows in isometric illustration of the venting and separating device 100 from an outwardly facing side while in Figure 17 an isometric section view of the venting and separating device 100 is illustrated.

The first separation screen 10 is embodied prism-shaped while the second separation screen 20 is embodied corrugated in the form of a cylinder.

The first separation screen 10 can be flowed through in axial direction 70 while the second separation screen 20 can be flowed through radially. The flow direction is illustrated in Figure 17. The screen openings 12 of the first separation screen 10 are embodied of a slotted hole configuration as are the screen openings 22 of the second separation screen 20.

### Reference Numbers

- 10: first separation screen
- 11: end face
- 12: first screen opening
- 14: cover plate
- 16: wall
- 20: second separation screen
- 22: second screen opening
- 24: cover plate
- 26: wall
- 28: bypass element
- 30: fastening tab
- 50: housing
- 52: housing opening
- 54: housing wall
- 56: inner side
- 58: interior
- 60: membrane
- 70: axial direction
- 72: radial direction
- 74: flow direction
- 100: venting and separating device

## Claims

1. A venting and separating device (100) for a housing (50), the venting and separating device (100) comprising:
a first separation screen (10) comprising first screen openings (12); and
a second separation screen (20) comprising second screen openings (22),
wherein the second separation screen (20) is surrounded circumferentially by the first separation screen (10),
the first separation screen (10) and the second separation screen (20) overlap each other in an axial direction (70),
for intended mounting at the housing (50), the second separation screen (22) completely engages across a housing opening (52) for venting,
a wall (16) of the first separation screen (10) and/or a wall (26) of the second separation screen (20) is corrugated multiple times,
the first separation screen (10) and the second separation screen (20) are arranged to be flowed through serially, and
for intended mounting at the housing (50), at least a downstream one among the first separation screen (10) and the second separation screen (20) in respect to flow is flowed through in a radial direction (72).

2. The venting and separating device (100) according to claim 1, wherein the first separation screen (10) and/or the second separation screen (20) are in a form of one among a right prism open at one side, a cylinder open at one side, and multiple cylinder sections abutting each other.

3. The venting and separating device (100) according to claim 1, wherein the first separation screen (10) and the second separation screen (20) have the same axial extensions.

4. The venting and separating device (100) according to claim 1, wherein the first separation screen (10) and the second separation screen (20) have different axial extensions, the second separation screen (20) having a larger axial extension than that of the first separation screen (10) so that the second separation screen (20) projects in sections past the first separation screen (10).

5. The venting and separating device (100) according to claim 1, further comprising at least one fastening device for fastening at the housing (50),
wherein the fastening device is arranged at the first separation screen (10), and
the fastening device comprises a fastening tab (30).

6. The venting and separating device (100) according to claim 1, wherein the first separating screen (10) and the second separation screen (20) respectively comprise a first cover plate (14) and a second cover plate (24) that cover the first separation screen (10) and the second separation screen (20) at an end face side, and
the second cover plate (24) and the first cover plate (14) are embodied as one piece.

7. The venting and separating device (100) according to claim 6, wherein the first cover plate (14) of the first separation screen (10) and the second cover plate (24) of the second separation screen (20) are present at an end face (11) of the first separation screen (10) and the second separation screen (20) that, for intended mounting at the housing (50), is facing toward an interior (58) of the housing (50).

8. The venting and separating device (100) according to claim 1, wherein a cross section of the second separating screen (20) follows a shape of a cross section of the housing opening (52).

9. The venting and separating device (100) according claim 6, wherein at least one among the first cover plate (14) and the second cover plate (24) is, at least in sections, free of through openings, and
the second cover plate (24) of the second separation screen (20) is embodied fluid-tightly.

10. The venting and separating device (100) according to claim 6, wherein at least one among the first cover plate (14) and the second cover plate (24) comprises an electrically nonconductive material.

11. The venting and separating device (100) according to claim 6, wherein the second cover plate (24) of the second separating screen (20) comprises a bypass element (28) comprising a rated break point being a perforation that is at least part-circumferentially arranged and that penetrates the second cover plate (24).

12. The venting and separating device (100) according to claim 1, wherein the first separation screen (10) and/or the second separation screen (20) are flowed through radially.

13. The venting and separating device (100) according to claim 6, wherein the second separation screen (20) is radially flowed through,
the first separation screen (10) is axially flowed through and/or, at least in sections, is radially flowed through, and
the first cover plate (14) of the first separation screen (10) is fluid-permeable and comprises the first screen openings (12).

14. The venting and separating device (100) according to claim 1, wherein the first separation screen (10) and the second separation screen (20) comprise a heat-resistant material, and
the first separation screen (10) and the second separation screen (20) are connected by material fusion or by frictional connection.

15. The venting and separating device (100) according to claim 1, further comprising a medium for depth filtration of particles arranged between the first separation screen (10) and the second separation screen (20).

16. A housing (50) for receiving battery cells, the housing (50) comprising:
a housing wall (54) with a housing opening (52); and
the venting and separating device (100) according to claim 1 and closing the housing opening (52) at an inner side (56) of the housing wall (54).

17. The housing (50) according to claim 16, wherein the venting and separating device (100) further comprises an areally spanned-across membrane (60) closing the housing opening (52) by being fluid-tightly connected indirectly or directly to a circumferential rim of the housing opening (52).

18. The housing (50) according to claim 17, wherein at least one cross-sectional area of the second separation screen (20) is closed by the areally spanned-across membrane (60).

## Patentansprüche

1. Entlüftungs- und Trennvorrichtung (100) für ein Gehäuse (50), die Entlüftungs- und Trennvorrichtung (100) umfassend:
ein erstes Trennsieb (10) mit ersten Sieböffnungen (12); und
ein zweites Trennsieb (20) mit zweiten Sieböffnungen (22),
wobei das zweite Trennsieb (20) in Umfangsrichtung vom ersten Trennsieb (10) umgeben ist,
sich das erste Trennsieb (10) und das zweite Trennsieb (20) in Achsrichtung (70) überlappen,
zur bestimmungsgemäßen Montage am Gehäuse (50), das zweite Trennsieb (22) vollständig über eine Gehäuseöffnung (52) zur Entlüftung eingreift,
eine Wand (16) des ersten Trennsiebs (10) und/oder eine Wand (26) des zweiten Trennsiebs (20) mehrfach gewellt ist,
das erste Trennsieb (10) und das zweite Trennsieb (20) so angeordnet sind, dass sie nacheinander durchströmt werden, und
zur bestimmungsgemäßen Montage am Gehäuse (50), mindestens ein stromabwärts gelegenes Trennsieb (10) und das zweite Trennsieb (20) in Bezug auf die Strömung in radialer Richtung (72) durchströmt wird.

2. Entlüftungs- und Trennvorrichtung (100) nach Anspruch 1, wobei das erste Trennsieb (10) und/oder das zweite Trennsieb (20) die Form eines einseitig offenen rechtwinkligen Prismas, eines einseitig offenen Zylinders und mehrerer aneinanderstoßender Zylinderabschnitte aufweisen.

3. Entlüftungs- und Trennvorrichtung (100) nach Anspruch 1, wobei das erste Trennsieb (10) und das zweite Trennsieb (20) im Wesentlichen die gleichen axialen Ausdehnungen haben.

4. Entlüftungs- und Trennvorrichtung (100) nach Anspruch 1, wobei das erste Trennsieb (10) und das zweite Trennsieb (20) unterschiedliche axiale Ausdehnungen haben, wobei das zweite Trennsieb (20) eine größere axiale Ausdehnung als das erste Trennsieb (10) hat, so dass das zweite Trennsieb (20) abschnittsweise über das erste Trennsieb (10) hinausragt.

5. Entlüftungs- und Trennvorrichtung (100) nach Anspruch 1, umfassend ferner mindestens eine Befestigungsvorrichtung zum Befestigen am Gehäuse (50),
wobei die Befestigungsvorrichtung am ersten Trennsieb (10) angeordnet ist und die Befestigungsvorrichtung eine Befestigungslasche (30) umfasst.

6. Entlüftungs- und Trennvorrichtung (100) nach Anspruch 1, wobei das erste Trennsieb (10) und das zweite Trennsieb (20) jeweils eine erste Abdeckplatte (14) und eine zweite Abdeckplatte (24) umfassen, die das erste Trennsieb (10) und das zweite Trennsieb (20) an einer Stirnseite abdecken, und
die zweite Abdeckplatte (24) und die erste Abdeckplatte (14) einteilig ausgeführt sind.

7. Entlüftungs- und Trennvorrichtung (100) nach Anspruch 6, wobei die erste Abdeckplatte (14) des ersten Trennsiebs (10) und die zweite Abdeckplatte (24) des zweiten Trennsiebs (20) an einer Stirnseite (11) des ersten Trennsiebs (10) und des zweiten Trennsiebs (20) vorhanden sind, das, bei der bestimmungsgemäßen Montage am Gehäuse (50), zum Innenraum (58) des Gehäuses (50) hin ausgerichtet ist.

8. Entlüftungs- und Trennvorrichtung (100) nach Anspruch 1, wobei ein Querschnitt des zweiten Trennsiebs (20) einer Form eines Querschnitts der Gehäuseöffnung (52) folgt.

9. Entlüftungs- und Trennvorrichtung (100) nach Anspruch 6, wobei mindestens eine der ersten Abdeckplatte (14) und der zweiten Abdeckplatte (24) zumindest abschnittsweise frei von Durchgangsöffnungen ist, und
die zweite Abdeckplatte (24) des zweiten Trennsiebs (20) fluiddicht ausgebildet ist.

10. Entlüftungs- und Trennvorrichtung (100) nach Anspruch 6, wobei mindestens eine der ersten Abdeckplatte (14) und der zweiten Abdeckplatte (24) ein elektrisch nichtleitendes Material umfasst.

11. Entlüftungs- und Trennvorrichtung (100) nach Anspruch 6, wobei die zweite Abdeckplatte (24) des zweiten Trennsiebs (20) ein Bypasselement (28) umfasst, das eine Sollbruchstelle in Form einer zumindest teilweise umlaufend angeordneten Perforation aufweist und die die zweite Abdeckplatte (24) durchdringt.

12. Entlüftungs- und Trennvorrichtung (100) nach Anspruch 1, wobei das erste Trennsieb (10) und/oder das zweite Trennsieb (20) radial durchströmt werden.

13. Entlüftungs- und Trennvorrichtung (100) nach Anspruch 6, wobei das zweite Trennsieb (20) radial durchströmt wird,
das erste Trennsieb (10) axial und/oder zumindest abschnittsweise radial durchströmt wird, und
die erste Abdeckplatte (14) des ersten Trennsiebs (10) fluiddurchlässig ist und die ersten Sieböffnungen (12) aufweist.

14. Entlüftungs- und Trennvorrichtung (100) nach Anspruch 1, wobei das erste Trennsieb (10) und das zweite Trennsieb (20) ein hitzebeständiges Material aufweisen, und
das erste Trennsieb (10) und das zweite Trennsieb (20) durch Materialverschmelzung oder durch reibschlüssige Verbindung miteinander verbunden sind.

15. Entlüftungs- und Trennvorrichtung (100) nach Anspruch 1, die ferner ein Medium zur Tiefenfiltration von Partikeln umfasst, das zwischen dem ersten Trennsieb (10) und dem zweiten Trennsieb (20) angeordnet ist.

16. Gehäuse (50) zur Aufnahme von Batteriezellen, das Gehäuse (50) umfassend:
eine Gehäusewand (54) mit einer Gehäuseöffnung (52); und
die Entlüftungs- und Trennvorrichtung (100) nach Anspruch 1, die die Gehäuseöffnung (52) an einer Innenseite (56) der Gehäusewand (54) verschließt.

17. Gehäuse (50) nach Anspruch 16, wobei die Entlüftungs- und Trennvorrichtung (100) ferner eine flächendeckend überspannte Membran (60) umfasst, die die Gehäuseöffnung (52) verschließt, indem sie indirekt oder direkt mit einem Umfangsrand der Gehäuseöffnung (52) fluiddicht verbunden ist.

18. Gehäuse (50) nach Anspruch 17, wobei mindestens eine Querschnittsfläche des zweiten Trennsiebs (20) durch die flächendeckend überspannte Membran (60) verschlossen ist.

## Revendications

1. Dispositif de ventilation et de séparation (100) pour un boîtier (50), le dispositif de ventilation et de séparation (100) comprenant:
un premier tamis de séparation (10) comprenant des premières ouvertures de tamis (12); et
un deuxième tamis de séparation (20) comprenant des deuxièmes ouvertures de tamis (22),
dans lequel le deuxième tamis de séparation (20) est entouré circonférentiellement par le premier tamis de séparation (10),
le premier tamis de séparation (10) et le deuxième tamis de séparation (20) se chevauchent dans une direction axiale (70),
pour un montage prévu sur le boîtier (50), le deuxième tamis de séparation (22) s'engage complètement à travers une ouverture de boîtier (52) pour la ventilation,
une paroi (16) du premier tamis de séparation (10) et/ou une paroi (26) du deuxième tamis de séparation (20) est ondulée à plusieurs reprises,
le premier tamis de séparation (10) et le deuxième tamis de séparation (20) sont disposés de manière à être traversés en série, et
destiné à être monté sur le boîtier (50), au moins l'un en aval parmi le premier tamis de séparation (10) et le deuxième tamis de séparation (20) par rapport à l'écoulement est traversé dans une direction radiale (72).

2. Dispositif de ventilation et de séparation (100) selon la revendication 1, dans lequel le premier tamis de séparation (10) et/ou le deuxième tamis de séparation (20) se présentent sous la forme d'un prisme droit ouvert d'un côté, d'un cylindre ouvert d'un côté ou de plusieurs sections cylindriques aboutées les unes aux autres.

3. Dispositif de ventilation et de séparation (100) selon la revendication 1, dans lequel le premier tamis de séparation (10) et le deuxième tamis de séparation (20) ont sensiblement les mêmes extensions axiales.

4. Dispositif de ventilation et de séparation (100) selon la revendication 1, dans lequel le premier tamis de séparation (10) et le deuxième tamis de séparation (20) ont des extensions axiales différentes, le deuxième tamis de séparation (20) ayant une extension axiale plus grande que celle du premier tamis de séparation (10) de sorte que le deuxième tamis de séparation (20) fait saillie par sections au-delà du premier tamis de séparation (10).

5. Dispositif de ventilation et de séparation (100) selon la revendication 1, comprenant en outre au moins un dispositif de fixation pour fixer le boîtier (50),
dans lequel le dispositif de fixation est disposé au niveau du premier tamis de séparation (10), et le dispositif de fixation comprend une patte de fixation (30).

6. Dispositif de ventilation et de séparation (100) selon la revendication 1, dans lequel le premier tamis de séparation (10) et le deuxième tamis de séparation (20) comprennent respectivement une première plaque de recouvrement (14) et une deuxième plaque de recouvrement (24) qui recouvrent le premier tamis de séparation (10) et le deuxième tamis de séparation (20) au niveau d'une face d'extrémité, et
la deuxième plaque de recouvrement (24) et la première plaque de recouvrement (14) sont réalisées d'un seul tenant.

7. Dispositif de ventilation et de séparation (100) selon la revendication 6, dans lequel la première plaque de recouvrement (14) du premier tamis de séparation (10) et la deuxième plaque de recouvrement (24) du deuxième tamis de séparation (20) sont présentes au niveau d'une face d'extrémité (11) du premier tamis de séparation (10) et du deuxième tamis de séparation (20) qui, pour un montage prévu sur le boîtier (50), fait face à l'intérieur (58) du boîtier (50).

8. Dispositif de ventilation et de séparation (100) selon la revendication 1, dans lequel une section transversale du deuxième tamis de séparation (20) suit la forme d'une section transversale de l'ouverture du boîtier (52).

9. Dispositif de ventilation et de séparation (100) selon la revendication 6, dans lequel au moins l'une parmi la première plaque de recouvrement (14) et la deuxième plaque de recouvrement (24) est, au moins par sections, dépourvue d'ouvertures de passage, et
la deuxième plaque de recouvrement (24) du deuxième tamis de séparation (20) est réalisée de manière étanche aux fluides.

10. Dispositif de ventilation et de séparation (100) selon la revendication 6, dans lequel au moins l'une parmi la première plaque de recouvrement (14) et la deuxième plaque de recouvrement (24) comprend un matériau électriquement non conducteur.

11. Dispositif de ventilation et de séparation (100) selon la revendication 6, dans lequel la deuxième plaque de recouvrement (24) du deuxième tamis de séparation (20) comprend un élément de dérivation (28) comprenant un point de rupture nominal qui est une perforation disposée au moins partiellement sur la circonférence et qui traverse la deuxième plaque de recouvrement (24).

12. Dispositif de ventilation et de séparation (100) selon la revendication 1, dans lequel le premier tamis de séparation (10) et/ou le deuxième tamis de séparation (20) sont traversés radialement.

13. Dispositif de ventilation et de séparation (100) selon la revendication 6, dans lequel le deuxième tamis de séparation (20) est traversé radialement,
le premier tamis de séparation (10) est traversé axialement et/ou, au moins par sections, est traversé radialement, et
la première plaque de recouvrement (14) du premier tamis de séparation (10) est perméable aux fluides et comprend les premières ouvertures de tamis (12).

14. Dispositif de ventilation et de séparation (100) selon la revendication 1, dans lequel le premier tamis de séparation (10) et le deuxième tamis de séparation (20) comprennent un matériau résistant à la chaleur, et
le premier tamis de séparation (10) et le deuxième tamis de séparation (20) sont reliés par fusion de matériaux ou par liaison par friction.

15. Dispositif de ventilation et de séparation (100) selon la revendication 1, comprenant en outre un milieu pour la filtration en profondeur des particules, disposé entre le premier tamis de séparation (10) et le deuxième tamis de séparation (20).

16. Boîtier (50) destiné à recevoir des cellules de batterie, le boîtier (50) comprenant:
une paroi de boîtier (54) avec une ouverture de boîtier (52); et
le dispositif de ventilation et de séparation (100) selon la revendication 1 et fermant l'ouverture de boîtier (52) au niveau d'un côté intérieur (56) de la paroi du boîtier (54).

17. Boîtier (50) selon la revendication 16, dans lequel le dispositif de ventilation et de séparation (100) comprend en outre une membrane (60) s'étendant sur toute la surface, fermant l'ouverture de boîtier (52) en étant reliée de manière étanche aux fluides, indirectement ou directement, à un bord circonférentiel de l'ouverture de boîtier (52).

18. Boîtier (50) selon la revendication 17, dans lequel au moins une surface de section transversale du deuxième tamis de séparation (20) est fermée par la membrane (60) s'étendant sur toute la surface.
